# EUROPEAN PATENT SPECIFICATION

(11) **EP 0 621 751 B1**
(45) Date of publication and mention of the grant of the patent: **20.08.1997**
(21) Application number: 93901869.3
(22) Date of filing: 14.01.1993
(51) Int. Cl.: A21C 11/04

(54) **APPARATUS AND METHOD FOR CUTTING OF SHEETED FOOD MATERIAL**
VORRICHTUNG UND VERFAHREN ZUM ZERSCHNEIDEN VON ESSBAREM BLATTMATERIAL
APPAREIL ET PROCEDE POUR LE DECOUPAGE DE MATIERE ALIMENTAIRE FEUILLETEE

(30) Priority: 14.01.1992 GB 9200721
(43) Date of publication of application: 02.11.1994
(73) Proprietor: UNITED BISCUITS (UK) LIMITED, West Drayton, Middlesex UB7 6PR (GB)
(72) Inventor: HILL, Brian Derek, Sutton Coldfield, West Midlands B75 6AJ (GB)
(74) Representative: Humphreys, Ceris Anne
(86) International application number: GB9300075
(87) International publication number: WO9313668

(56) References cited:
- CH-A- 127 235
- US-A- 2 887 964
- US-A- 4 276 800

## Description

This invention relates to the cutting of shaped pieces of sheeted food material, for example, sheeted dough, especially sheeted biscuit dough, or sheeted confectionery material, out of a sheet of the material. It relates especially to the cutting out, from a sheet of the material, of shaped pieces of biscuit dough that are to be baked to form biscuits.

Although the invention is not limited to the cutting out of pieces of dough in the manufacture of biscuits, the following discussion will be limited to that case in the interests of simplicity.

In the manufacture of biscuits, dough is formed and rolled out into a continuous sheet out of which appropriately shaped pieces of the raw dough are cut. The pieces of raw dough, which are commonly referred to as pre-forms, are then baked to form biscuits.

When the process is carried out on a commercial scale, the cutting out of the pre-forms is preferably done by means of rotary cutters.

When rotary cutters are used, sheeted dough is conveyed beneath a first, forming roller and then beneath a second, cutting roller. The forming roller rotates so that the circumferential speed at its cylindrical surface matches the linear speed of the dough passing beneath, and the face of the roller is pressed into the dough sheet to emboss a pattern, for example, the name of the biscuit or of the manufacturer, or a decorative design, or to form holes by the use of docker pins. The sheet of dough passes from beneath the first roller and is then conveyed beneath the second, cutting roller. The circumferential speed of the cutting roller also matches the speed of the dough passing beneath it. The cylindrical surface of the second roller carries cutters, which comprise cutting blades that form walled enclosures and are typically arranged in a grid made up of columns extending in a direction having a component along the length of the roller and rows extending around its circumference. The wall of each enclosure forms a die that is pressed into the dough sheet to cut out the pre-forms of the desired shape. The first and second rollers rotate at the same speeds and are usually so arranged that the embossed pattern is in the centre of each pre-form that is cut.

In another arrangement, the docker pins are located on the second roller and within the enclosures that are formed by the cutter blades.

An important disadvantage of some known rotary cutters is that they have no mechanism for some freeing the pre-forms from the cutters. There is then a tendency for pre-forms to be retained by the cutters. When docker pins are provided on the cutter roller as mentioned above, the retention problem is exacerbated. If a pre-form is retained by a cutter, each subsequent attempted cutting operation performed by that cutter wedges the pre-form more firmly in the cutter.

United States Patent No. 4 276 800 (Koppa et al) discloses rotary cutting apparatus for cutting and scoring a dough sheet in the manufacture of biscuits, crackers or the like. The scoring serves to facilitate the breaking of the sheet into individual biscuits or the like after the sheet has been baked, while the cutting means cuts out pieces of unwanted dough to control the shape of the biscuits or the like. Thus, for example, baked products that are rectangular in shape save for the fact that the corners are cut off can be produced. The cutters used to cut out the unwanted portions of the dough sheet are completely surrounded by cutters, and there is a consequent risk that the unwanted portions will be retained within the cutters. That problem is overcome by arranging that ports are provided in the surface of the drum on which the cutters are mounted and within each area enclosed by the cutters, and that a vacuum source is applied to each port during cutting and after that until the drum has rotated through a sufficient angle for the dough piece to be retained by gravity, the dough piece subsequently being expelled from the cutter surrounding it by the application of a pressure source to the port.

The invention provides apparatus for cutting shaped pieces out of a sheeted food material as defined in independent claim 1.

Advantageously, each ejection means includes a rotatably mounted cam-follower for engagement with the cam means.

Advantageously, the cutting means are so mounted on the rotary member as to be individually removable and replaceable. The cutting blades may be made of metal but are preferably made of a plastics material.

Advantageously, the ejection element of each ejection means has an outer surface that extends, save for apertures to accommodate any docker pins, over substantially the entire region enclosed by the blade of the cutting means.

The apparatus of the invention is especially advantageous when, as is often required, the cutting means incorporate docker pins. Then, the ejection elements of the associated ejection means incorporate apertures to accommodate the docker pins.

Each of the cutting means and/or its associated ejection element may also be provided with one or more cleaning ports arranged to allow the passage of cleaning fluid through, and cleaning of, the cutting means and/or its ejection element without removal of the cutting means from the rotary member.

Although, in certain circumstances, the ejection elements might move radially inwards under the action of the sheeted food material during a cutting operation effected by the associated cutting means, it is preferable to provide means for causing each ejection element to move radially inwards after it has moved radially outwards to effect ejection of a piece from the associated cutting means. Advantageously, the means for causing each ejection element to move inwards is resilient means, preferably, a spring.

It is normally preferred, and may in some arrangements be imperative, for subsequent operations, that the cut pieces should fall back from the cutting means into the positions in the sheet that they occupied before cutting. For that result to be achieved, the cam means must be so arranged as to cause the ejection elements to move radially outwards at a particular angular position, and it is advantageous that the angular position of the cam means be adjustable so as to alter the angular position at which each ejection element is caused by the cam means to move radially outwards. In practice, the optimum angular position of the cam means is best determined by trial and error. Thus, with the apparatus in operation, the angular position of the cam is adjusted until the desired result is achieved.

The invention also provides a method of cutting shaped pieces out of a sheeted food material, which comprises rotating a rotary member, which is provided with cutting means, in contact with a moving sheet of the material and positively ejecting the pieces from the cutting means by arranging that stationary cam means causes ejection elements to move radially outwards in such timed relation with the rotation of the rotary member, that the piece cut by each cutting means is positively ejected before the cutting means executes another cutting operation.

Advantageously, each shaped piece cut from the sheet falls back into the aperture in the sheeted food material that resulted from the piece having been cut out.

Preferably, the cutting of the shaped pieces of a sheeted food material is effected using apparatus in accordance with the invention.

Two forms of apparatus for cutting shaped pieces out of a sheeted food material and constructed in accordance with the invention will now be described, by way of example, with reference to Figs. 2 to 13 of the accompanying drawings, in which:
Fig. 1 is a diagrammatic perspective view of a known form of rotary cutter;
Fig. 2 is a diagrammatic side view, mainly in axial cross-section, of a main part of the first form of the apparatus of the invention with the cutting and ejection means omitted in the interests of clarity;
Fig. 3 is a transverse cross-section taken through a portion of the main part of the apparatus shown in Fig. 2, and on a larger scale than Fig. 2,
Fig. 4 is a view, again in transverse cross-section, of a detail of the portion of the apparatus shown in Fig. 3;
Fig. 5 is a view, again in transverse cross-section, of another detail of the portion of the apparatus shown in Fig. 3;
Fig. 6 is a plan view of a further detail of the portion of the apparatus shown in Fig. 3;
Fig. 7 is a plan view of a detail of the portion of the apparatus shown in Fig. 5;
Fig. 8 is an end view of the main part of the first form of the apparatus on a larger scale than Fig. 2;
Fig. 9 is a transverse cross-section taken through a portion of the main part of the second form of the apparatus of the invention;
Fig. 10 is a view, again in transverse cross-section, of a detail of the portion of the apparatus shown in Fig. 9;
Fig. 11 is a view, again in transverse cross-section, of another detail of the portion of the apparatus shown in Fig. 9;
Fig. 12 is a plan view of a further detail of the portion of the apparatus shown in Fig. 9; and
Fig. 13 is a plan view of a detail of the portion of the apparatus shown in Fig. 11.

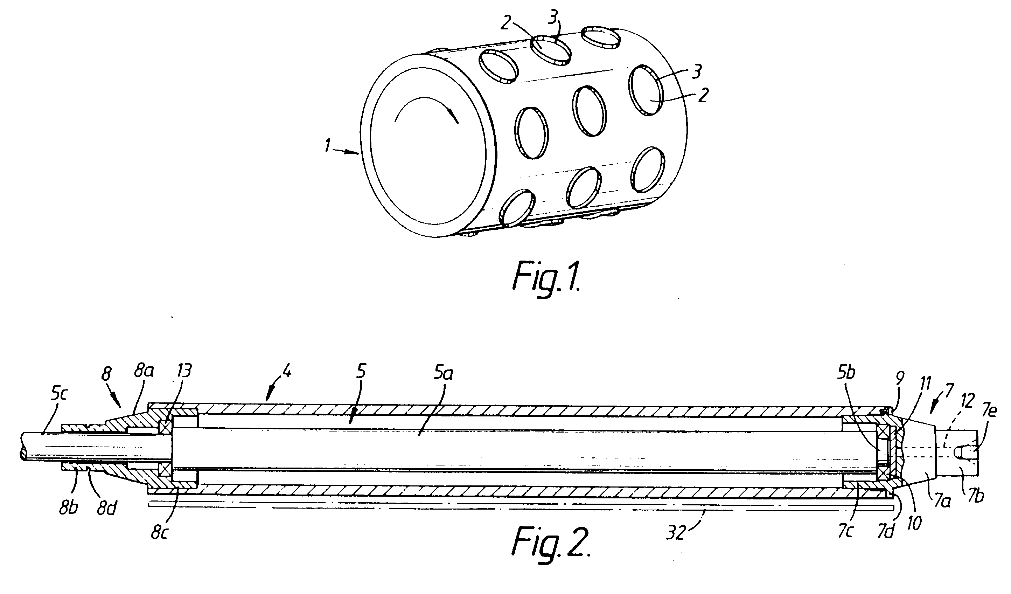

Referring to Fig. 1 of the accompanying drawings, a conventional rotary cutter comprises a hollow cylindrical member, indicated generally by the reference numeral 1, formed with apertures 2, each of which is surrounded by a cutter blade 3 integral with the wall of the cylindrical member. The apertures 2, and the associated cutter blades 3, are arranged in columns extending along the length of the cylindrical member 1 and in rows extending around the circumference of the cylindrical member. The apertures 2 are of generally oval configuration and, in each circumferentially extending row, the apertures are staggered circumferentially with respect to the apertures of the or each adjacent row. Thus, the cutter blades 3 in any column of cutter blades are caused to begin the cutting operation sequentially rather than simultaneously, so that a large load is not suddenly applied to the cylindrical member 1.

Referring to Figs. 2 to 7 of the accompanying drawings, and initially to Fig. 2, the first form of the apparatus of the invention comprises a hollow cylindrical rotary member, indicated generally by the reference numeral 4. Mounted coaxially with the rotary member 4 is a camshaft indicated generally by the reference numeral 5. In addition to a main portion 5a, the camshaft 5 has end portions 5b and 5c, respectively, that have been machined down so that they are of reduced diameter. The main portion 5a of the camshaft 5 and the end portion 5b are surrounded by the rotary member 4, but the end portion 5c extends beyond the adjacent end of the rotary member (see Fig. 2).

The ends of the rotary member 4 are closed by housings, which are indicated generally by the reference numerals 7 and 8, respectively. The housing 7 is made up of a central, frusto-conical portion 7a, which tapers towards its outer end where the housing terminates in a cylindrical portion 7b. At its inner end, the housing 7 terminates in a partly externally screw-threaded spigot 7c, which is in engagement with an internally screw-threaded end portion of the rotary member 4. An outwardly extending annular flange 7d on the housing 7 abuts the adjacent end of the rotary member 4 and lock screws, of which one is shown at 9, pass through apertures in the annular flange 7d and engage longitudinal screw-threaded bores in the rotary member 4. Instead of the spigot 7c being in screw-threaded engagement with the rotary member 4, the spigot 7c may be a sliding fit within the rotary member, the spigot being provided with a key accomodated within a groove in the rotary member to prevent relative rotation between the spigot and the rotary member, lock screws 9 again being provided so that relative axial movement between the spigot and the rotary member is provided.

The end portion 5b of the camshaft 5 is journalled in a bearing 10, which is located axially between a shoulder formed by the transition from the main portion 5a and the end portion 5b of the camshaft, and a shoulder formed on the inner surface of the cylindrical flange 7c. To facilitate removal of the bearing 10 there is provided an extraction plate 11, to which access for a striker rod is given by an axial bore 12 in the housing 7.

The housing 8 is generally similar to the housing 7. Thus, it has a central, frusto-conical portion 8a tapering towards its outer end where it terminates in a cylindrical portion 8b. At its inner end, the housing 8 terminates in a spigot 8c. As shown in Fig. 2, the spigot 8c extends within, and is permanently secured to, an end portion of the rotary member 4, but it could instead be releasably secured to the rotary member in the same manner as the spigot 7c of the housing 7 is secured. The cylindrical portion 8b of the housing 8 has a circumferential groove 8d to receive a circlip (not shown).

The end portion 5c of the camshaft 5 is journalled in a bearing 13, which is located axially by the end face of the main portion 5a of the camshaft and an internal shoulder in the housing 8.

It will be seen that the housings 7 and 8 together support the camshaft 5, through the bearings 10 and 13, and also so support the rotary member 4 that the camshaft can remain stationary while the rotary member rotates around it. The housings 7 and 8 are rotatably mounted in the remainder of the apparatus, which is not shown because it will normally be conventional, but which is briefly described below.

The inner end part of the cylindrical portion 7b of the housing 7 is journalled in a bearing (not shown) which is housed in a fixed block (not shown). The bearing is located axially relative to the housing 7 by a shoulder formed at the transition from the frusto-conical portion 7a of the housing 7 to the cylindrical portion 7b of the housing, and by a gearwheel (not shown) mounted on the outer end part of the cylindrical portion 7b. The gearwheel is prevented from rotating relative to the housing 7 by engagement with a keyway 7e in the cylindrical portion 7b. The gearwheel is prevented from moving axially beyond the end of the cylindrical portion 7b by an endplate (not shown), which abuts the outer end of the cylindrical portion of the housing 7. The endplate is itself releasably secured by an axial screw, which is in engagement with the wall of the bore 12, the bore being screw-threaded to receive it. Drive to the rotary member 4 is transmitted via the gearwheel and the housing 7.

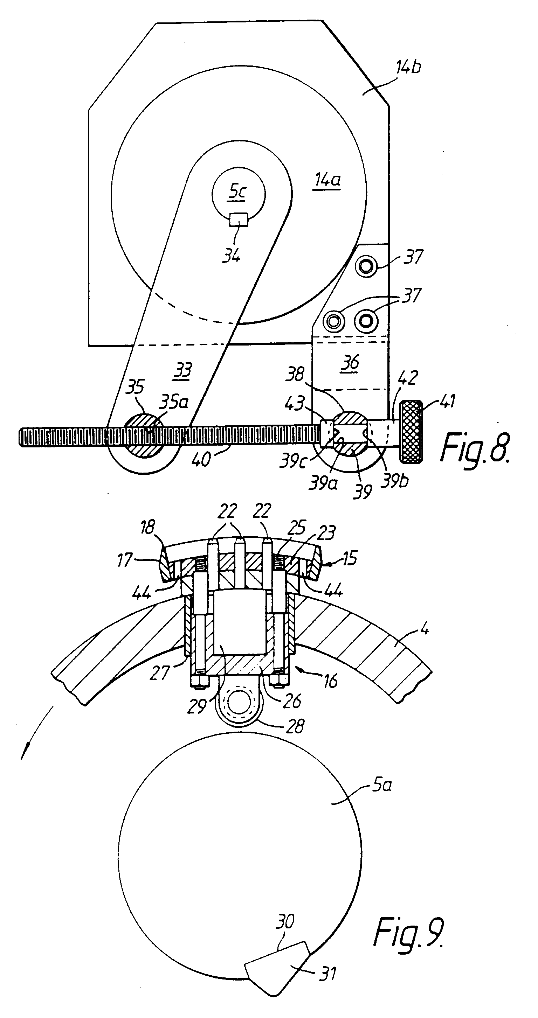

The inner end part of the cylindrical portion 8b of the housing 8 is journalled in a bearing assembly 14a (not shown in Fig. 2 but shown in Fig. 8) housed in a second fixed block 14b (also shown in Fig. 8). Relative to the housing 8, that bearing assembly 14a is located axially by a shoulder formed at the transition from the frusto-conical portion 8a to the cylindrical portion 8b and by a circlip (not shown) in the circumferential groove 8d.

Fixed to the second bearing block 14b is adjustment means for the camshaft 5, which is described below with reference to Fig. 8. The adjustment means which is in engagement with the end portion 5c of the camshaft 5, enables the angular position of the camshaft to be adjusted and maintained precisely in a desired position.

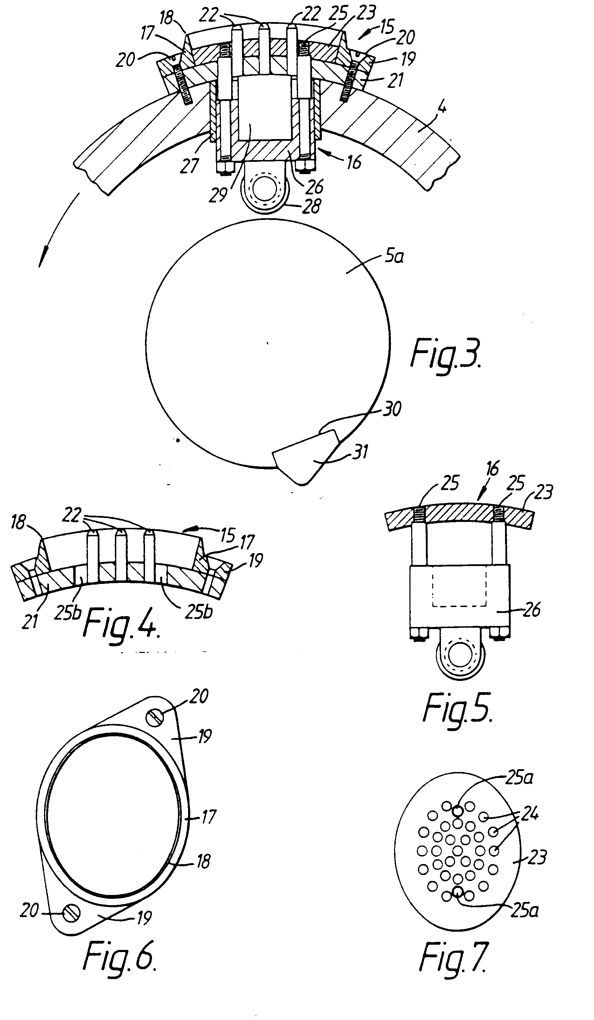

Omitted from Fig. 2 in the interests of clarity are apertures in the rotary member 4, the cutting means and ejection means associated with each of those apertures, and also the cam that is carried by the camshaft 5. The form taken by each of those items can be seen in Fig. 3.

The rotary member 4 has mounted on it a plurality of cutting means of which one is shown in Fig. 3 and is indicated generally by the reference numeral 15. Each cutting means 15 has associated with it ejection means of which one is shown in Fig. 3 and is indicated generally by the reference numeral 16.

The cutting means 15 (see Figs. 3, 4 and 6) includes a ring-shaped member 17 formed at its inner edge with a cutting blade 18 and with lugs 19 which are releasably secured to the rotary member 4 by screws 20. Also secured to the ring-shaped member 17, and closing the inner end of the region that is bounded by the cutting blade 18 is a plate 21 (shown in Figs. 3 and 4) supporting docker pins, of which three are shown at 22. The screws 20 pass through bores in the plate 21, which is thus clamped between the inner surface of the ring-shaped member 17 and the outer surface of the rotary member 4.

The ejection means 16 (see Figs. 3, 5 and 7) includes an ejection element in the form of a plate 23, which extends over the entire region bounded by the cutting blade 18, save for apertures 24 (not shown in Fig. 5, but shown in Fig. 7) to receive the docker pins 22. The plate 23 is secured by studs 25 which are each in screw-threaded engagement with bores 25a in the plate 23 at one end and, at the other end, with screw-threaded bores in a drive block 26, which is a sliding fit in a sleeve 27 secured in the aperture of the rotary member 4. The studs 25 pass through bores 25b (see Fig. 4) in the plate 21.

The drive block 26 carries a rotary cam follower 28. A coil spring (not shown) situated within a cavity 29 in the drive block 26 acts in compression between the inner wall of the cavity and the inner surface of the plate 21, and so tends to maintain the drive block itself and the plate 23 in their radially innermost positions in which the cam follower 28 is held adjacent to, but out of contact with, the camshaft 5a.

The main portion 5a of the camshaft 5 is formed with a longitudinally extending slot 30 which houses a cam 31. The cam 31 extends along the whole length of the main portion of the camshaft and is of uniform cross-section throughout. Once during each rotation of the rotary member 4, the rotation being in the direction of the arrow in Fig. 3, the cam follower 28 engages the cam 31, and the plate 23 is caused to move rapidly outwards against the action of the spring.

Referring now to Fig. 8 and to the adjustment means for the camshaft 5 mentioned above, there is secured to the end portion 5c of the camshaft 5 that which extends beyond the second bearing block 14b and bearing assembly 14a, a lever arm 33. A key 34 accommodated partly in a groove in the lever arm 33 and partly in a groove in the end portion 5c of the camshaft ensures that rotation of the lever arm 33 about the axis of the camshaft 5 is transmitted precisely to the camshaft itself.

The lever arm 33 is formed with an aperture at its free end which is occupied by a peg 35 formed with a screw-threaded cross-bore 35a. The peg 35 is retained within the aperture but is freely rotatable with respect to the lever arm 33. A bracket 36 secured to the bearing block 14b by means of cap screws 37 is also formed with an aperture 38 in which is retained a freely rotatable peg 39. The peg 39 is formed with a cross-bore 39a, which is not screw-threaded like the cross-bore 35a, but the peg 39 is formed at the ends of its cross-bore with flat surfaces 39b and 39c, respectively.

An adjustment member 40 extends through both the cross-bore 39a and the cross-bore 35a in the pegs 39 and 35, respectively. The adjustment member 40 is smooth sided where it passes through the cross-bore 39a but is otherwise formed with a screw-thread, a portion of which engages the screw-thread of the cross-bore 35a. A knurled knob 41 is provided at one end of the adjustment member 40 to allow it to be rotated about its axis, a shank 42 and a locking nut 43 seated against the flat surfaces 39b and 39c, respectively, ensuring no translational movement of the adjustment member 40 relative to the peg 39, Thus, rotation of the knurled knob 41, and hence the screw-threaded portion of the adjustment member 40, will cause the lever arm 33 to rotate, and, in turn, cause rotation of the camshaft end portion 5c. In that manner, the angular position of the cam 31 can be adjusted, and it is retained in a particular angular position unless and until the knurled knob 41 is rotated.

The first form of the apparatus operates in the following way.

A sheeted food material, for example, a sheeted biscuit dough, is fed horizontally beneath the rotary member 4 in a direction perpendicular to the axis of the rotary member by an endless conveyor belt, which is shown schematically at 32 in Fig. 2.

The rotary member 4 is driven via the gearwheel (not shown, but referred to above) so that the circumferential speed of the cutting blades 18 is substantially equal to the speed of the conveyor belt 32. Considering the cutting means 15 and the ejection means 16 in a single circumferentially extending row, the following sequence of events takes place.

When a cutting blade 18 meets the sheet of food material, the plate 23 of the associated ejection means is in its radially innermost position, so that the full radial depth of the cutting blade 18 is exposed, and the cutting blade progressively cuts out from the sheet a piece of which the shape is determined by the shape of the region enclosed by the cutting blade. At the same time, holes are formed in the piece by the docker pins 22. Just as the cutting operation is completed, the rotary member 4 reaches a position at which the cam follower 28 engages the cam 31 which causes the drive block 26, and hence the plate 23, to move rapidly outwards, thereby overcoming any tendency for the piece that has been cut out from the sheet to be retained within the region enclosed by the cutting blade 18. By adjustment of the angular position of the camshaft 5 while the apparatus is in operation, it is usually possible to arrange that the piece falls back into the aperture in the sheet produced by the cutting out of the piece.

Immediately the plate 23 reaches its radially outermost position under the action of the cam 31, the cam follower 28 moves out of engagement with the cam, and the plate 23 returns to its radially innermost position before the associated cutting means 15 starts another cutting operation. In the meantime, each of the other cutting means associated with the circumferentially extending row of apertures in the rotary member 4 performs a similar cutting operation.

When the sheet is a sheet of biscuit dough, the pieces that have been cut out are fed to an oven where they are baked to form biscuits.

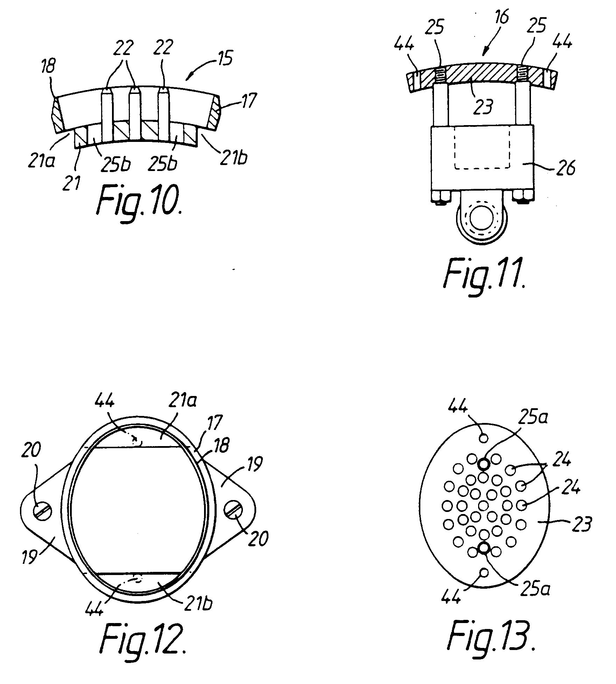

Referring to Figs. 9 to 13, the second form of apparatus in accordance with the invention is similar to the first form described with reference to Figs. 2 to 8, and the same reference numerals are used to indicate the parts of the second form that are the same as in the first form of apparatus. The main difference between the second form of the apparatus and the first form is that the plate 23 of the ejection means is formed with a pair of cleaning ports 44 (see Figs. 9, 11 and 13), access to which is provided via cut-away segments 21a and 21b, respectively, of the plate 21 of the cutting means 15. That can best be seen in Fig. 12, which is a plan view of the cutting blade 18 and of the plate 21 lying underneath the cutting blade, the docker pins 22 and the apertures 25b having been omitted for the sake of clarity. The position of the cleaning ports 44 in the plate 23 in relation to the cut-away segments 21a and 21b when the ejection means 16 and the cutting means 15 are assembled is shown in chain lines in Fig. 12. The only other difference between the second form of the apparatus and the first form is that the lugs 19 have been moved to positions on the edge of the oval ring-shaped member 17 on its minor axis. Compressed air (or other suitable cleaning fluid, especially steam) can be injected into the segments 21a and 21b and the cleaning ports 44, when the apparatus is not in use, to cause the removal of debris or a build-up of fat in the cutting means 15 and ejection means 16 without necessitating removal of the cutting means from the rotary member 4. The possibility of a build-up of fat arises because the sheeted food material may exude fat under the pressure exerted on it by the cutting means 15.

Such a cleaning arrangement is appropriate when, as is usually preferred, the cutting blade 8 is made of a plastics material. If, on the other hand, the cutting blade 8 is made of bronze, it is relatively easy to form, by drilling, ports in the cutting blade on opposite sides of the cutting means 15. Cleaning can then be effected by injecting cleaning fluid through those ports into the region surrounded by the cutting blade.

The second form of the apparatus otherwise operates in exactly the same manner as the first form described above and is provided with adjustment means for its cam 31 similar to that shown in Fig. 8.

It will be appreciated that, in each of the forms of the apparatus shown in Figs. 2 to 13, the time at which each ejection means 16 operates is determined by the time at which the centre of the associated aperture in the rotary member 4 reaches a particular position, whereas the correct timing of the operation of the ejection means is determined by when the cutting operation is completed. That can, of course, easily be allowed for when all the cutting blades 18 define areas of the same size, shape and orientation. In order to increase the proportion of the area of the sheet that can be cut, however, it it sometimes desired to cut out pieces of two different sizes, and/or shapes, with, for example, the pieces cut by every alternate circumferentially extending row of the cutting means 15 being of one size and/or shape, and pieces cut out by the remaining cutting means being of the other size and/or shape. Where the widths of the two different types of piece (as defined by the cutting blades 18) measured in a circumferential direction, differ, the cam 31 (of which the cross-section is uniform along its length) must be replaced by an appropriately stepped cam, or by a plurality of individual cams, which may be identical to one another but which are arranged alternately, along the length of the camshaft, at two different angular positions.

## Claims

1. Apparatus for cutting shaped pieces out of a sheeted food material which comprises a generally hollow cylindrical rotary member (4) so mounted as to be rotatable about its axis, and a plurality of cutting means (15), each arranged around the cylindrical outer surface of the rotary member (4), each cutting means (15) including a cutting blade (18) that encloses a region having the shape of a piece to be cut out and being so arranged that, on rotation of the rotary member (4) adjacent to a sheet of the food material, each cutting means (15) cuts out a shaped piece from the sheet, characterised in that the apparatus also comprises a plurality of ejection means (16), each associated with a different one of the cutting means (15) and each including an ejection element (23) that is reciprocable in a radial direction, radially outward movement of the ejection element (23) effecting positive ejection of a piece cut out by the associated cutting means (15) and radially inward movement of the ejection element (23) permitting the associated cutting means (15) to perform a further cutting operation, and cam means (31) which is within the interior of the rotary member (4) and is stationary whilst the apparatus is in operation and which is engaged in operation by each ejection means (16) to cause the ejection element (23) of the ejection means (16) to move radially outward at a given position during each rotation of the rotary member (4) to effect positive ejection of each piece cut out by the associated cutting means (15).

2. Apparatus as claimed in claim 1, wherein each ejection means (16) includes a rotatably mounted cam follower (28) for engagement with the cam means (31).

3. Apparatus as claimed in claim 1 or claim 2, wherein the cutting means (15) are so mounted on the rotary member as to be individually removable and replaceable.

4. Apparatus as claimed in any one of claims 1 to 3, wherein the cutting blades (18) are made of a plastics material.

5. Apparatus as claimed in any one of claims 1 to 4, wherein the ejection element (23) of each ejection means (16) has an outer surface that extends, save for apertures (24) to accommodate any docker pins (22), over substantially the entire region enclosed by the cutting blade (18) of the cutting means (15).

6. Apparatus as claimed in claim 5, wherein the cutting means (15) incorporates docker pins (22) and the ejection element (23) of the associated ejection means (16) incorporates apertures (24) arranged to accommodate the docker pins (22).

7. Apparatus as claimed in any one of claims 1 to 6, wherein each of the cutting means (15) and/or its associated ejection element (23) is provided with one or more cleaning ports (44) arranged to allow the passage of cleaning fluid through, and cleaning of, the cutting means (15) and/or its ejection element (23) without disassembly of the cutting means (15) or removal of the cutting means (15) from the rotary member (4).

8. Apparatus as claimed in any one of claims 1 to 7, wherein there is provided means for causing each ejection element (23) to move radially inward after it has moved radially outward to effect ejection of a piece from the associated cutting means (15).

9. Apparatus as claimed in claim 8, wherein the means for causing each ejection element (23) to move inwards is resilient means.

10. Apparatus as claimed in claim 9, wherein the resilient means is a spring.

11. Apparatus as claimed in any one of claims 1 to 10, wherein the angular position of the cam means (31) about its axis is adjustable so as to alter the angular position at which each ejection element (23) is caused by the cam means (31) to move radially outwards.

12. A method of cutting shaped pieces out of a sheeted food material, which comprises rotating a rotary member (4), which is provided with cutting means (15), in contact with a moving sheet of the material and positively ejecting the pieces from the cutting means (15) by arranging that stationary cam means (31) causes ejection elements (23) to move radially outwards in such timed relation with the rotation of the rotary member, that the piece cut by each cutting means is positively ejected before the cutting means (15) executes another cutting operation.

13. A method as claimed in claim 12, wherein each shaped piece cut from the sheet falls back into the aperture in the sheeted food material that resulted from the piece having been cut out.

14. A method as claimed in claim 12 or claim 13, wherein the cutting of the shaped pieces of a sheeted food material out of a sheet of the material is effected using apparatus as claimed in any of claims 1 to 11.

## Patentansprüche

1. Vorrichtung zum Ausstechen von geformten Teilen aus zu einer Bahn geformtem Nahrungsmittelmaterial, welche Vorrichtung ein generell hohles, zylindrisches umlaufendes Bauteil (4) umfaßt, das so montiert ist, daß es um seine Achse drehbar ist, und eine Mehrzahl von Ausstechmitteln (15), die jeweils um die zylindrische Außenoberfläche des drehbaren Bauteils (4) angeordnet sind, wobei jedes Ausstechmittel (15) eine Schneide (18) umfaßt, die einen Bereich mit der Form eines auszustechenden Teiles umschließt und so angeordnet ist, daß bei Drehung des umlaufenden Bauteils (4) nahe einer Bahn aus Nahrungsmittelmaterial jedes Ausstechmittel (15) ein geformtes Teil aus der Bahn aussticht, dadurch gekennzeichnet, daß die Vorrichtung außerdem eine Mehrzahl von Ausstoßmitteln (16) umfaßt, jeweils zugeordnet einem anderen der Ausstechmittel (15) und jeweils ein Ausstoßelement (23) umfassend, das in einer Radialrichtung hin- und herbeweglich ist, wobei eine radiale Auswärtsbewegung des Ausstoßelements (23) sicheren Ausstoß eines von dem zugeordneten Ausstechmittel (15) ausgestochenen Teiles bewirkt und radiale Einwärtsbewegung des Ausstoßelements (23) dem zugeordneten Ausstechmittel (15) ermöglicht, einen weiteren Schneidarbeitsgang auszuführen, und Nockenmittel (31), die sich im Inneren des umlaufenden Bauteils (4) befinden und stationär sind, wahrend die Vorrichtung in Betrieb ist, und mit der im Betrieb jedes Ausstoßmittel (16) in Anlage gelangt, um das Ausstoßelement (23) des Ausstoßmittels (16) zu einer radialen Auswärtsbewegung in einer gegebenen Position während jeder Drehung des umlaufenden Bauteils (4) zu bringen, um sicheren Ausstoß jedes von den zugeordneten Ausstechmitteln (15) ausgeschnittenen Teiles zu bewirken.

2. Vorrichtung nach Anspruch 1, bei der jedes Ausstoßmittel (16) einen drehbar montierten Nockenfolger (28) für das Anlegen an das Nockenmittel (31) umfaßt.

3. Vorrichtung nach Anspruch 1 oder 2, bei der die Ausstechmittel (15) so auf dem umlaufenden Bauteil montiert sind, daß sie einzeln abnehmbar und austauschbar sind.

4. Vorrichtung nach einem der Ansprüche 1 bis 3, bei der die Schneiden (18) aus einem Kunststoffmaterial hergestellt sind.

5. Vorrichtung nach einem der Ansprüche 1 bis 4, bei der das Ausstoßelement (23) jedes Ausstoßmittels (16) eine Außenoberfläche aufweist, die sich, ausgenommen Öffnungen (24) zur Aufnahme von Dockerstiften (22), über im wesentlichen die gesamte Region erstreckt, die von der Schneide (18) des Ausstechmittels (15) umschlossen ist.

6. Vorrichtung nach Anspruch 5, bei der die Ausstechmittel (15) Dockerstifte (22) umfassen und das Ausstoßelement (23) des zugeordneten Ausstoßmittels (16) Öffnungen (24) aufweist, die für die Aufnahme der Dockerstifte (22) angeordnet sind.

7. Vorrichtung nach einem der Ansprüche 1 bis 6, bei der jedes Ausstechmittel (15) und/oder sein zugeordnetes Ausstoßelement (23) mit einer oder mehreren Reinigungsöffnungen (44) versehen ist, die so angeordnet sind, daß sie den Durchtritt von Reinigungsfluid hindurch ermöglichen und das Reinigen des Ausstechmittels (15) und/oder seines Ausstoßelements (23), ohne Zerlegen der Ausstechmittel (15) oder Abnehmen der Ausstechmittel (15) von dem umlaufenden Bauteil (4).

8. Vorrichtung nach einem der Ansprüche 1 bis 7, bei der Mittel vorgesehen sind, um jedes Ausstoßelement (23) zu einer radialen Einwärtsbewegung zu bringen, nachdem es sich radial auswärts für das Bewirken des Ausstoßes eines Teiles von dem zugeordneten Ausstechmittel (15) bewegt hat.

9. Vorrichtung nach Anspruch 8, bei der das Mittel für das Bewirken der Einwärtsbewegung jedes Ausstoßelements (23) ein elastisches Mittel ist.

10. Vorrichtung nach Anspruch 9, bei der das elastische Mittel eine Feder ist.

11. Vorrichtung nach einem der Ansprüche 1 bis 10, bei der die Winkelposition des Nockenmittels (31) um seine Achse so einstellbar ist, daß die Winkelposition verändert wird und an welcher jedes Ausstoßelement (23) von den Nockenmitteln (31) zu einer radialen Auswärtsbewegung gebracht wird.

12. Ein Verfahren zum Ausstechen von geformten Teilen aus zu einer Bahn geformtem Nahrungsmittelmaterial, das das Umlaufenlassen eines umlaufenden Bauteils (4) umfaßt, das mit Ausstechmitteln (15) versehen ist, in Kontakt mit einer sich bewegenden Bahn des Materials, und sicheres Ausstoßen der Teile aus den Ausstechmitteln (15), indem dafür gesorgt wird, daß stationäre Nockenmittel (31) Ausstoßelemente (23) veranlassen, sich radial auswärts in solcher zeitlichen Beziehung mit der Drehung des umlaufenden Bauteils zu bewegen, daß das von jedem Ausstechmittel ausgestochene Teil sicher ausgestoßen wird, bevor das Ausstechmittel (15) einen weiteren Ausstecharbeitsgang ausführt.

13. Ein Verfahren nach Anspruch 12, bei dem jedes geformte, aus der Bahn ausgestochene Teil in die Öffnung in dem zu einer Bahn geformten Nahrungsmittelmaterial zurückfällt, die von dem Ausstechen des Teiles herrührte.

14. Ein Verfahren nach Anspruch 12 oder 13, bei dem das Ausstechen der geformten Teile eines zu einer Bahn geformten Nahrungsmittelmaterials aus einer Bahn des Materials unter Verwendung der Vorrichtung nach einem der Ansprüche 1 bis 11 bewirkt wird.

## Revendications

1. Appareil servant à découper dans une matière alimentaire feuilletée des morceaux façonnés, qui comprend une pièce tournante cylindrique généralement creuse (4), montée de manière à ce qu'elle tourne autour de son axe, et un ensemble de moyens de coupe (15), tous agencés autour de la surface externe cylindrique de la pièce tournante (4), chaque moyen de coupe (15) incluant une lame coupante (18) qui délimite une région ayant la forme du morceau à découper et étant agencé de telle sorte que, au cours de la rotation de la pièce tournante (4) tout près d'une feuille de la matière alimentaire, chaque moyen de coupe (15) découpe dans la feuille un morceau façonné, caractérisé en ce que l'appareil comprend également un ensemble de moyens d'éjection (16), chacun d'entre eux étant séparément associé à un moyen de coupe (15) et incluant chacun un élément éjecteur (23) pouvant aller et venir dans la direction radiale, le mouvement radial vers l'extérieur de l'élément éjecteur (23) provoquant l'éjection complète du morceau qui a été découpé par le moyen de coupe (15) associé, et le mouvement radial vers l'intérieur de l'élément éjecteur (23) permettant au moyen de coupe (15) associé de procéder à l'opération de coupe suivante, et un moyen de came (31) qui se trouve à l'intérieur de la pièce tournante (4) et qui est stationnaire pendant le fonctionnement de l'appareil et qui, en cours de fonctionnement, se conjugue à chaque moyen d'éjection (16) de façon à amener l'élément éjecteur (23) du moyen d'éjection (16) à se déplacer radialement vers l'extérieur, à un endroit donné durant chaque tour effectué par la pièce tournante (4), de façon à provoquer l'éjection complète de chaque morceau qui a été découpé par le moyen de coupe (15) associé.

2. Appareil selon la revendication 1, où chaque moyen d'éjection (16) inclut un galet de came (28) rotatif destiné à se conjuguer au moyen de came (31).

3. Appareil selon la revendication 1 ou la revendication 2, où les moyens de coupe (15) sont montés sur la pièce tournante de façon à pouvoir être individuellement retirés et remplacés.

4. Appareil selon l'une quelconque des revendications 1 à 3, où les lames coupantes (18) sont faites de matière plastique.

5. Appareil selon l'une quelconque des revendications 1 à 4, où l'élément éjecteur (23) de chaque moyen d'éjection (16) présente une surface externe s'étendant, à l'exception d'ouvertures (24) laissant passer des pointes (22), pratiquement sur toute la région délimitée par la lame de coupe (18) du moyen de coupe (15).

6. Appareil selon la revendication 5, où le moyen de coupe (15) incorpore des pointes (22) et l'élément éjecteur (23) du moyen d'éjection associé (16) incorpore des ouvertures (24) agencées pour laisser passer les pointes (22).

7. Appareil selon l'une quelconque des revendications 1 à 6, où chaque moyen de coupe (15) et/ou son élément éjecteur associé (23) sont munis d'un ou de plusieurs orifices de nettoyage (44) agencés pour permettre qu'un liquide de nettoyage les traverse et le nettoyage du moyen de coupe (15) et/ou de son élément éjecteur (23), sans que l'on ait à démonter ou à retirer le moyen de coupe (15) de la pièce tournante (4).

8. Appareil selon l'une quelconque des revendications 1 à 7, où l'on a prévu un moyen causant le mouvement radial vers l'intérieur de chaque élément éjecteur (23) suite à son déplacement radial vers l'extérieur provoquant l'éjection du morceau hors du moyen de coupe associé (15).

9. Appareil selon la revendication 8, où le moyen servant à ramener vers l'intérieur chaque élément éjecteur (23) est un moyen élastique.

10. Appareil selon la revendication 9, où le moyen élastique est un ressort.

11. Appareil selon l'une quelconque des revendications 1 à 10, où l'on peut régler la position angulaire du moyen de came (31) autour de son axe, de façon à modifier la position angulaire où le moyen de came (31) amène chaque élément éjecteur (23) à se déplacer radialement vers l'extérieur .

12. Méthode pour découper dans une matière alimentaire feuilletée des morceaux façonnés, qui comprend la rotation d'une pièce tournante (4), qui est munie de moyens de coupe (15) en contact avec la feuille en mouvement de la matière, et l'éjection complète des morceaux hors du moyen de coupe (15), au moyen d'un agencement dans lequel un moyen de came stationnaire (31) amène les éléments éjecteurs (23) à se déplacer radialement vers l'extérieur en synchronisme avec la rotation de la pièce tournante de façon à provoquer l'éjection complète de chaque morceau qui a été découpé par chaque moyen de coupe avant que le moyen de coupe (15) ne procède à une autre opération de coupe.

13. Méthode selon la revendication 12, où chaque morceau façonné qui a été découpé dans la feuille retombe dans l'ouverture dans la matière alimentaire feuilletée qui est apparue lorsque ce morceau a été découpé.

14. Méthode selon la revendication 12 ou la revendication 13, où le découpage de morceaux façonnés faits d'une matière alimentaire feuilletée dans une feuille de la matière est réalisé au moyen d'un appareil selon l'une quelconque des revendications 1 à 11.
